# EUROPEAN PATENT APPLICATION

(11) **EP 1 998 399 A1**
(43) Date of publication of application: **03.12.2008**
(21) Application number: 08154607.9
(22) Date of filing: 16.04.2008
(51) Int. Cl.: H01M 8/24

(54) **Stack for fuel cell**

(30) Priority: 28.05.2007 KR 20070051503
(71) Applicant: Samsung SDI Co., Ltd., Suwon-si, Gyeonggi-do (KR)
(72) Inventor: Suh, Jun-Won c/o Samsung SDI Co., lt., Suwon-si Gyeonggi-do (KR)
(74) Representative: Grey, Ian Michael

(57) **Abstract**

A fuel cell stack has an electrical generator including at least one unit cell between a pair of opposing end plates having a length and a width, wherein an aspect ration of the length of the end plate to the width of the end plate is between about 1 to about 4. A center fastener penetrates the electrical generator through generally central regions of the end plates and a plurality of edge fasteners penetrates the electrical generator through generally peripheral regions of the end plates. The center fastener and the plurality of edge fasteners are adapted to press the end plates together.

## Description

The present invention relates to a fuel cell, and more particularly to a fuel cell stack having an improved fastening structure.

A fuel cell generates electrical energy from an oxidation reaction of fuel and a reduction reaction of oxidant gas. Fuel cells can be broadly classified into polymer electrolyte membrane fuel cells and direct oxidation membrane fuel cells depending on the type of fuel used.

A polymer electrolyte membrane fuel cell receives a reformate gas reformed from liquid or gas fuel, and an oxidant gas such as air. A polymer electrolyte membrane fuel cell generates electrical energy from an oxidation reaction of reformate gas and a reduction reaction of oxidant gas. A polymer electrolyte membrane fuel cell has superior output characteristics compared to a direct oxidation membrane fuel cell, and can operate at a relatively low temperature. In addition, polymer electrolyte membrane fuel cells have fast starting and response characteristics. Therefore, polymer electrolyte membrane fuel cells are widely being investigated for use as a power source for vehicles, a distributable power source for buildings, and a compact power source for electronic devices.

A direct oxidation fuel cell receives a liquid fuel and an oxidant gas (e.g., air), and generates electrical energy by an oxidation reaction of the fuel and a reduction reaction of the oxidant gas. A direct oxidation fuel cell includes a generator, which is a primary unit that generates electrical energy. The generator includes a membrane-electrode assembly (MEA), separators disposed at lateral sides of the MEA, and a gasket formed at an edge portion of the MEA to seal a space between a pair of MEAs. In addition, a plurality of generators are consecutively arranged to form a stack.

Each generator of a fuel cell stack has a generally rectangular planar shape. The fuel cell stack may have fasteners engaging the generators, and the fasteners are generally located at each corner of the rectangular planar shape.

To function adequately, conventional fuel cell stacks require a high tension at the corners imparted by the fasteners since the horizontal length is much longer than the vertical length. However, providing tension at only the corners, even with a plurality of fasteners, may be insufficient, and accordingly electrical output of the fuel cell stack may deteriorate.

The above information disclosed in this Background section is only for enhancement of understanding of the background of the invention and therefore may contain information that does not form the prior art that is already known in this country to a person of ordinary skill in the art.

In one exemplary embodiment, a fuel cell stack has an electrical generator including at least one unit cell between a pair of opposing end plates having a length and a width, wherein an aspect ratio of the length of the end plate to the width of the end plate is between about 1 to about 4. A center fastener penetrates the electrical generator through generally central regions of the end plates and a plurality of edge fasteners penetrates the electrical generator through generally peripheral regions of the end plates. The center fastener and the plurality of edge fasteners are adapted to press the end plates together.

Where bolts are used as fasteners, a torque ratio of a center fastener torque to an edge fastener torque may be between about 1.5 and 5. In an exemplary embodiment of the present invention, the center fastener and the plurality of edge fasteners each comprise a bolt for penetrating the generator and a nut for fixing the bolt to the generator. The diameter of a center fastener may be greater than a diameter of an edge fastener.
FIG. 1 is an exploded perspective view of a fuel cell stack according to an exemplary embodiment of the present invention.
FIG. 2 is a perspective view of a separator of FIG. 1.
FIG. 3 is a top view of the separator of FIG. 2.
FIG. 4 is a graph showing a correlation between an aspect ratio and a torque engaging pressure of the stack of FIG. 1.
FIG. 5 shows the test results of engaging pressure of the fastener when the aspect ratio of a fuel cell stack is about 3.

Embodiments of the present invention will be described more fully hereinafter with reference to the accompanying drawings, in which exemplary embodiments of the invention are shown. As those skilled in the art will realize, the described embodiments may be modified in various ways without departing from the spirit or scope of the present invention.

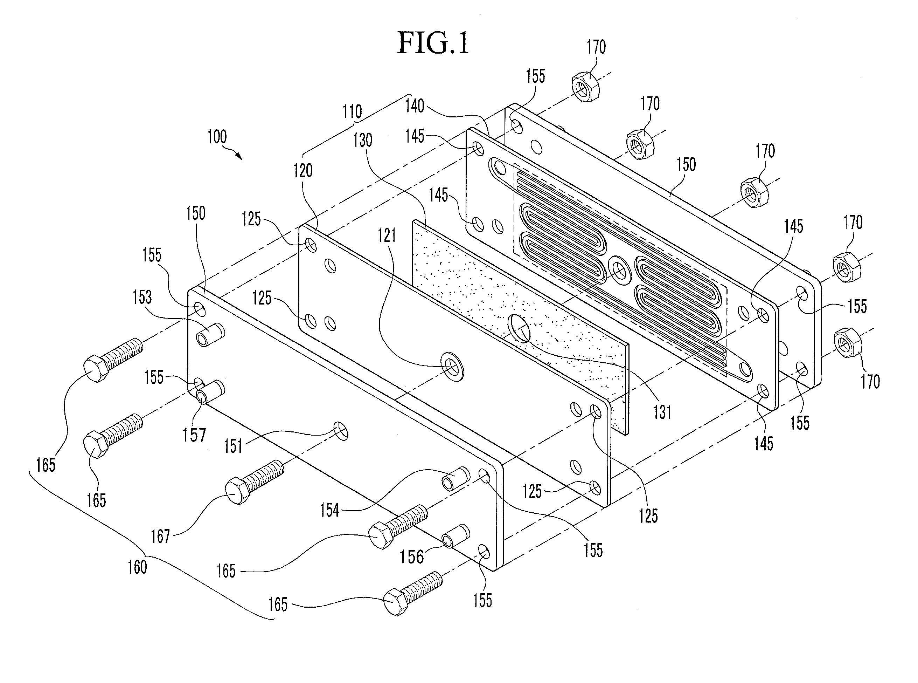

As shown in FIG. 1, a fuel cell stack 100 according to an exemplary embodiment of the present invention includes a generator 110 that receives fuel and an oxidant gas and generates electrical energy from an oxidation reaction of the fuel and a reduction reaction of the oxidant gas. In this case, an alcohol-containing fuel such as methanol or ethanol may be used as fuel and air may be used as the oxidant gas. However, the fuel and oxidant gas are not limited to those specifically described herein, and one of ordinary skill in the art will appreciate that other fuels and oxidant gases may be used. The generator 110 generates electricity, and is also called a unit cell. The fuel cell stack 100 is an assembly including sequentially arranged generators 110. In addition, the fuel cell stack 100 further includes end plates 150 bookending the generator assembly and at least one fastener 160 engaging the generators 110 and the end plates 150 together.

Each generator 110 includes a membrane-electrode assembly (MEA) 130 and first and second separators 120, 140 arranged on either side of the MEA 130. The MEA 130 has a cathode electrode and an anode electrode attached to the sides of a polymer electrolyte membrane. The anode electrode performs an oxidation reaction of the fuel and divides the fuel into electrons and protons. In addition, the polymer electrolyte membrane moves the protons to the cathode electrode and performs a reduction reaction of the protons and the oxidant gas.

In one exemplary embodiment, the first and second separators 120, 140 are plates. The first separator 120 may be a cathode partitioning plate having a channel facing the cathode electrode of the MEA 130. The second separator 140 may be an anode partitioning plate having a channel facing the anode electrode of the MEA 130. The first and second separators 120, 140 have substantially the same shape and configuration, and therefore, only the second separator 140 will be described.

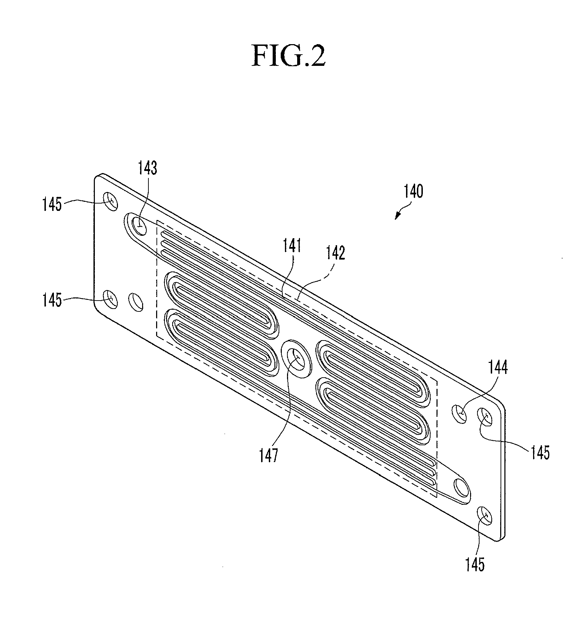

FIG. 2 is a perspective view of the separator of FIG. 1. As shown in FIG. 2, the second separator 140 is a rectangular plate. The second separator 140 has a channel 141 through which fuel flows. The channel 141 is located in the dotted line area 142 of FIG. 2 which generally corresponds to an area of the MEA 130 which abuts the second separator 140. The second separator 140 has a first manifold 143 penetrating an exterior side of the dotted line area 142 and acting as a passage. The first manifold 143 includes an inlet-side through which fuel is inserted and an outlet-side through which non-reacted fuel is emitted according an exemplary embodiment. However, the present invention is not limited to a separator with one manifold, and a plurality of first manifolds may be provided. In addition, a second manifold 144 is located on the second separator 140. The second manifold 144 acts as a passage through which oxidant gas flows into the first separator 120.

In one exemplary embodiment, the second separator 140 includes edge fastening holes 145 located peripherally of the channel 141 and a center fastening hole 147 located substantially at a center of the second separator 140, each hole adapted to receive a fastener 160.

Referring again to FIG. 1, the fuel cell stack 100 comprises a stack of generators 110 having end plates 150 bookending the stack of generators 110. The end plates 150 protect the generators 110 and have a surface area substantially corresponding to the surface area of separators 120, 140. The end plates 150 are engaged with the generators 110 by the fasteners 160. A center fastening hole 151 is located in substantially the center of each end plate 150, generally corresponding to the center fastening hole 147 of the second separator 140. In addition, edge fastening holes 155 are located on each end plate 150 corresponding to the edge fastening holes 145 of the second separator 140. In addition, a fuel inlet 153 corresponding to the first manifold 143 of the second separator 140 is located on each end plate 150, allowing fuel to be supplied to the generators 110 through the fuel inlet 153, and a fuel outlet 156 allows fuel to be exhausted from the generators. An oxidation inlet 154 corresponding to the second manifold 144 is located on each end plate 150 to allow oxidant gas to be supplied to the generators 110 through the oxidation inlet 154 and an oxidation outlet 157 allows oxidant gas to be exhausted from the generators.

The fasteners 160 engage the generators 110 and the end plates 150 and are adapted to press the end plates together. In one exemplary embodiment, the fastener 160 may comprise a bolt penetrating the generators 110 and a nut 170 for securing the bolt. The fasteners 160 include a center fastener 167 inserted into the center fastening hole 151 of the ends plates 150, a center fastening hole 131 of the MEA 130, and the center fastening holes 121, 147 of the first and second separators 120, 140, respectively, and edge fasteners 165 inserted into the edge fastening holes 125, 145, 155 of the first and second separators 120, 140 and end plates 150, respectively.

Generally, when bolts are used as fasteners 160, tension substantially corresponds to bolt torque. Accordingly, an increase in bolt torque results in a higher tension. In one exemplary embodiment, a diameter of the bolt of the center fastener 167 is greater than a diameter of the bolts of the edge fasteners 165 so that the center fastener may be maintained under higher tension than the edge fasteners. In other words, the torque applied to the center fastener 167 may be greater than the torque applied to the edge fasteners 165. Therefore, because in one exemplary embodiment there are more edge fasteners 165 than center fasteners 167, relatively uniform pressure may be applied to the center portion and the peripheral portions of the generators 110 and the end plates 150.

In the following description, a correlation between an engaging location of the fasteners 160 and the tension will be described in further detail. The first separator 120, the second separator 140, and the end plates 150 of the generators 110 are sequentially arranged, and the fasteners 160 are inserted through the first separator 120, the second separator 140, and the end plates 150. An engaging location and a tension of the fasteners 160 on the plane surface of the second separator 140 will be described in further detail.

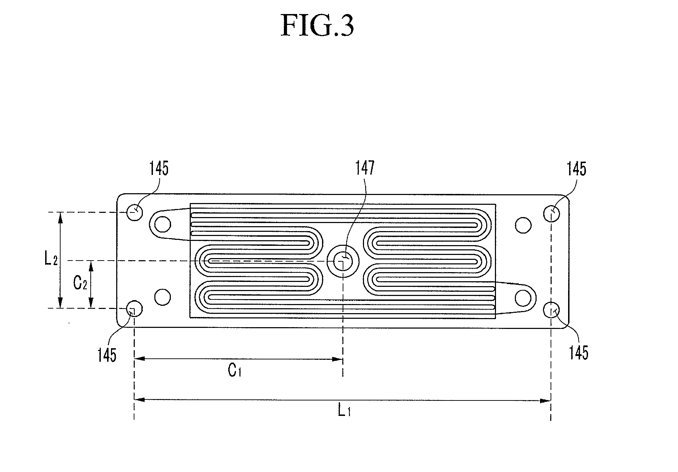

As shown in FIGs. 2 and 3, the second separator 140 may be rectangular. The center fastener 167 is inserted into the center fastening hole 147 of the second separator 140, and edge fasteners 165 are inserted into the edge fastening holes 145 of the second separator 140.

With reference to FIG. 3, a longitudinal distance between the edge fastening holes 145 is denoted as L1; a lateral distance between the edge fastening holes 145 is denoted as L2; a longitudinal distance between the center fastening hole 147 and the edge fastening hole 145 is denoted as C1; and a lateral distance between the center fastening hole 147 and the edge fastening hole 145 is denoted as C2. In order to apply uniform tension to the center fastener 167 and the edge fasteners 165, C1 is set to be about half of L1 and C2 is set to be about half of L2. In other words, the center fastening hole 147 may be located in substantially the middle of the second separator 140.

In one exemplary embodiment, the first separator 120, the second separator 140, and the end plate 150 (Fig. 1) have substantially the same lengths, and substantially the same widths. Accordingly, the aspect ratio, i.e., a ration of the length to the width of the first separator 120, the second separator 140, and the end plate 150 are the same. However, the present invention is not limited thereto.

An aspect ratio of the fuel cell stack may be determined by the ratio of a length to the width of the second separator 140. As described, the center fastening hole 147 is located substantially in the middle of the second separator 140 and each of a pair of the edge fastening holes 145 are symmetrically located proximate a perimeter of the second separator with respect to the center fastening hole 147. Thus, the aspect ration of the second separator 140 is the same as a ratio of the longitudinal distance L1 between the edge fastening holes 145 and the lateral distance L2 between the edge fastening holes 145 defined as L1 / L2. Accordingly, the aspect ration of the fuel cell stack is defined as L1 / L2.

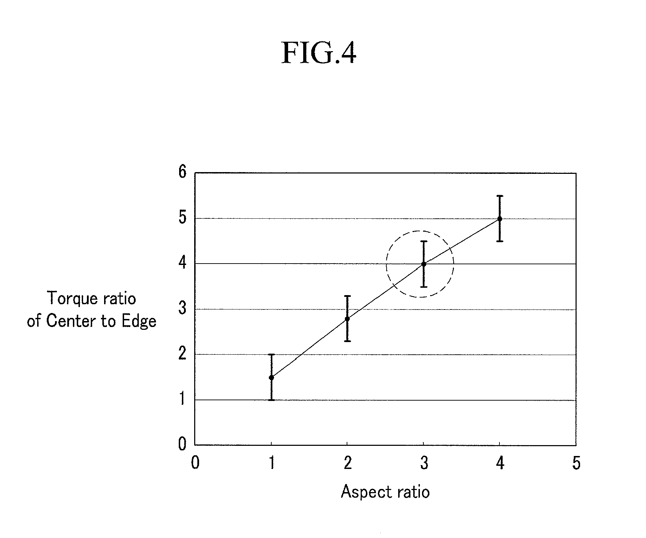

FIG. 4 is a graph showing a correlation between an aspect ratio and a torque ratio or a tension ratio of a center portion and an edge portion of the fuel cell stack of FIG. 1. As shown in FIG. 4, an aspect ratio of the fuel cell stack according to an exemplary embodiment of the present invention is within a range of about 1 to 4. When the aspect ratio of the fuel cell stack is greater than 4, a distance between the center fastener 167 and the edge fasteners 165 and 166 may be too far to apply a uniform tension thereto.

As illustrated in exemplary embodiments of the present invention, a more uniform and adequate compression force can be applied to the fuel cell stack by limiting a range of the aspect ratio in the structure that the center fastener 167 is fastened. Also, a number of the fasteners can be reduced, and thus reducing the fuel cell stack volume and thickness. In addition, compression force can be made further uniform because the center fastener 167 and the edge fasteners 165 may be fastened by unique tensions to the second separator 140, as follows.

The tension of the center fastener 167 is denoted as T1, and the tension of the edge fasteners 165 is denoted as T2. When the aspect ratio of the fuel cell stack satisfies the above range condition of between about 1 to about 4, a tension ratio (i.e., T1 / T2) of the center fastener 167 and the edge fasteners 165 in one exemplary embodiment is within a range of about 1.5 to 5. If the tension ratio of the fastener 160 is less than 1.5, the center fastener 167 has a relatively low tension, and accordingly, a compression force at the center portion of the fuel cell stack 100 may be insufficient. When the tension ratio of the fastener 160 is greater than 5, the center fastener 167 has a relatively high torque engaging pressure, and accordingly, excessive compression may be applied to the inner center portion of the fuel cell stack 100.

As a result of various test conditions, when the aspect ratio of the fuel cell stack 100 is 3, the tension ratio of the fastener 160 is within a range of about 3.5 to 4.5.

Under these conditions, contact resistance of the fuel cell stack 100 is reduced and relatively uniform engaging pressure may be applied to the fuel cell stack 100.

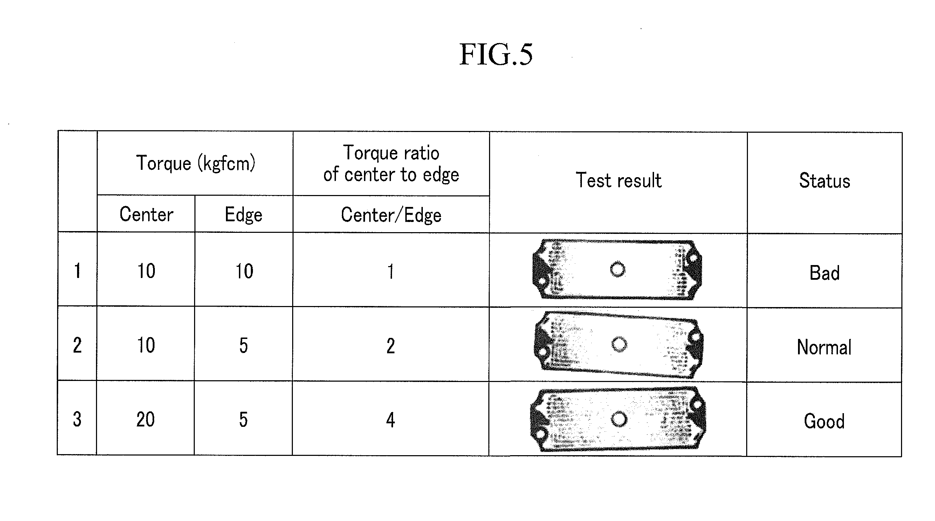

FIG. 5 is a diagram showing test results of the tension of the fastener when the aspect ratio of the fuel cell stack is 3, including schematic views of separators subjected to various torque engaging pressures. As shown in FIG. 5, the tension ratio of center to edge equals 1 in condition 1, and the test result of condition 1 shows that the inner center area of the separator has low contact resistance, schematically evidenced by the relatively light shading towards the center of the separator. This result is dissatisfactory since the tension of the center fastener 167 is relatively low.

In condition 2, the tension ratio of center to edge is 2, and the test result of condition 2 shows that the contact resistance is improved, as schematically evidenced by the relatively darker shading near a center of the separator. In condition 3, the tension ratio of center to edge is 4, and the test result of condition 3 shows that the separator has a relatively uniform contact resistance compared to condition 1 and condition 2, as schematically evidenced by the more uniform relative dark shading on the separator. As shown by the test results, the tension ratios of center to edge of condition 2 and condition 3 are within a desirable range according to the present exemplary embodiment. In general, it has been found that a more uniform and adequate compression force can be achieved when a tension ratio of the center fastener 167 to the edge fasteners 165 is about 4.

As described above, exemplary embodiments of the present invention provide a fuel cell stack including a fastener inserted through a center of the fuel cell stack so that compressive forces of the generators can be sufficiently maintained even though the aspect ratio of the fuel cell stack may be increased.

In addition, in one exemplary embodiment, the aspect ratio of the fuel cell stack and the tension ratio of center to edge of the fastener are set according to optimal conditions such that a number of fasteners may be reduced even though the stack shape may be similar to a conventional stack shape. Accordingly, the end plates may be thinner and the fuel cell stack volume may be reduced compared to a conventional fuel cell stack.

While this invention has been described in connection with what is presently considered to be practical exemplary embodiments, it is to be understood that the invention is not limited to the disclosed embodiments, but, on the contrary, is intended to cover various modifications and equivalent arrangements included within the scope of the appended claims. For example, although bolts and nuts are generally described as the fasteners, nuts could be replaced by threaded holes on one end plate. Additionally, other types of fasteners may be used, such as rivets, screws, or pins. Moreover, torque ratio may be measured in place of or in addition to tension ratio.

## Claims

1. A fuel cell stack comprising:
an electrical generator comprising at least one unit cell between a pair of opposing end plates having a length and a width; wherein an aspect ratio of the length of the end plate to the width of the end plate is between about 1 to about 4, a center fastener configured to penetrate the electrical generator through generally central regions of the end plates; and
a plurality of edge fasteners configured to penetrate the electrical generator through generally peripheral regions of the end plates; wherein the center fastener and the plurality of edge fasteners are adapted to press the end plates together.

2. The fuel cell stack of claim 1, wherein a tension on the center fastener is configured so as to be greater than a tension on each edge fastener.

3. The fuel cell stack of claim 2, wherein a torque ratio of a center fastener torque to an edge fastener torque is configured to be between about 1.5 and 5.

4. The fuel cell stack of claim 3, the electrical generator further comprising a separator having a length and a width, wherein an aspect ratio of the length to the width is about 3 and the torque ratio is between about 3.5 and 4.5.

5. The fuel cell stack of any preceding claim, wherein the electrical generator has a central opening to receive the center fastener.

6. The fuel cell stack of any preceding claim, wherein each of the center fastener and the plurality of edge fasteners comprises a bolt for penetrating the electrical generator and a nut for fixing the bolt to the generator.

7. The fuel cell stack of any preceding claim, wherein a diameter of a center fastener is greater than a diameter of an edge fastener.

8. The fuel cell stack of any preceding claim, wherein the plurality of edge fasteners are the same size.

9. The fuel cell stack of any preceding claim, wherein there are four edge fasteners.

10. The fuel cell stack of any preceding claim, wherein the separator is rectangular, and wherein one edge fastener is located proximate each corner of the separator.

11. The fuel cell stack of any preceding claim, comprising a plurality of electrical generators.

12. The fuel cell stack of any preceding claim, wherein the electrical generator further comprises a plurality of separators bookending a membrane-electrode assembly.

13. The fuel cell stack of claim 3, wherein the aspect ratio of the length of the end plate to the width of the end plate is about 3, and the torque ratio of the center fastener torque to the edge fastener torque is configured to be between about 3.5 and 4.5.

14. A method of assembling a fuel cell stack comprising an electrical generator having at least one unit cell between a pair of opposing end plates having a length and a width, wherein an aspect ratio of the length of the end plate to the width of the end plate is between about 1 to about 4, the method including the step of tightening a centre fastener penetrating the electrical generator through generally central regions of the end plates and tightening a plurality of edge fasteners penetrating the electrical generator through generally peripheral regions of the end plates to squeeze the end plates together.

15. The method of claim 14, wherein the method includes the step of applying a greater tension to the center fastener than to each edge fastener.

16. The method of claim 15, wherein the method comprises the step of tightening the centre and edge fasteners to a torque ratio of between about 1.5 and 5.
